# EUROPEAN PATENT APPLICATION

(11) **EP 3 531 236 A1**
(43) Date of publication of application: **28.08.2019**
(21) Application number: 18175957.2
(22) Date of filing: 05.06.2018
(51) Int. Cl.: G06F 1/32

(54) **INTEGRATED COMPUTER SYSTEM AND SYSTEM POWER CONSUMPTION CONTROL METHOD THEREOF**

(30) Priority: 23.02.2018 TW 107106155
(71) Applicant: Flytech Technology Co., Ltd., Taipei City 114 (TW)
(72) Inventor: LIU, Yun-Ping, Taipei City 114 (TW); LEE, Hsiao-Hui, Taipei City 114 (TW)
(74) Representative: Zeitler Volpert Kandlbinder Patent- und Rechtsanwälte Partnerschaft mbB

(57) **Abstract**

A system power consumption control method for an integrated computer system (100) is provided. The integrated computer system (100) includes an embedded controller (12), a power supply device (11) and plural peripheral devices. The power supply device (11) provides electric power at a supply power amount. The information corresponding to at least two predetermined power consumption amounts is provided from each peripheral device. The embedded controller (12) adds up the highest predetermined power consumption amounts and a basic power consumption amount to obtain a highest overall power consumption amount. If the highest overall power consumption amount is higher than the supply power amount, a power consumption adjustment application program is executed. If a specified peripheral device of the plural peripheral devices is ready to perform a task, the embedded controller (12) decreases the current power consumption amount of at least one of the running peripheral devices.

## Description

### FIELD OF THE INVENTION

The present invention relates to a computer technology, and more particularly to an integrated computer system and a system power consumption control method thereof.

### BACKGROUND OF THE INVENTION

With increasing development and popularity of science and technology, various electronic devices or computers have become indispensable devices in daily lives of people. For example, notebook computers, desktop computers or point-of-sale (POS) devices are widely used. Generally, these electronic devices are equipped with built-in storage batteries as power sources. In addition, external power sources (e.g., the utility AC power sources) are the main power sources of these electronic devices. Consequently, the electronic device is equipped with a DC power supply device or an adapter for converting the AC power source into DC voltage. The DC voltage is provided to the electronic device for powering the electronic device or associated equipment.

The point-of-sale device is a computer system with integrated functions. Generally, the point-of-sale device comprises a host and plural peripheral devices. For example, the peripheral devices include a display screen, a credit card reader, a card reading device, a keyboard, a mouse, a printer and any other appropriate peripheral device. For effectively operating these peripheral devices, the power supply device or the adapter (e.g., installed in the host) has to provide sufficient electric power to these peripheral devices.

For example, if the total power consumption amount of these peripheral devices and the components in the host is 90 Watt, the power level of the power supply device or the adapter must be at least 90 Watt or higher than 90 Watt. For example, the power supply device or the adapter with a power level of 120 Watt or more is adopted.

In accordance with the existing technology, the power supply device or the adapter with various power levels is compatible with the host of the point-of-sale device. In other words, the manufacturers may design and fabricate the power supply devices or the adapters according to different requirements in the markets. Generally, the host is sold in an all-in-one form. That is, after the power supply device or the adapter is installed in the host, the power supply device or the adapter cannot be disassembled or replaced by the user. Consequently, the user has to consider the applications of the point-of-sale device or the point-of-sale system in the further before purchasing it.

Generally, the power supply device with a higher power level is more expensive. However, in the practical applications, the maximum power level of the power supply device is not fully utilized. If the user purchases the power supply device with the higher power level in order to achieve stable electric power, the unused portion of the power level waste money. Whereas, if the user purchases the power supply device with the lower power level in order to save cost, the overall system is possibly in an extreme operating condition. For example, plural peripheral devices are running at the same time, and the running peripheral devices are operated at the highest power consumption amounts. Under this circumstance, the power supply device cannot provide sufficient electric power, and thus a power interruption problem occurs.

In other words, the conventional technology needs to be further improved.

### SUMMARY OF THE INVENTION

For solving the drawbacks of the conventional technologies, the present invention provides an integrated computer system and a system power consumption control method for the integrated computer system. In case that the supply power amount of the power supply device is insufficient, the power consumption amount of the running peripheral device is decreased. Consequently, the power supply device with the lower power level can be applied to the system with the higher power consumption amount in order to perform a task.

In accordance with an aspect of the present invention, there is provided a system power consumption control method for an integrated computer system. The integrated computer system includes an embedded controller, a power supply device and plural peripheral devices. The power supply device provides electric power at a supply power amount. The system power consumption control method includes the following steps. Firstly, a supply power information corresponding to the supply power amount is provided from the power supply device to the embedded controller. Then, a peripheral power consumption information corresponding to at least two predetermined power consumption amounts is provided from each peripheral device to the embedded controller. Then, the embedded controller adds up the highest predetermined power consumption amounts in each peripheral power consumption information and a basic power consumption amount of the integrated computer system so as to obtain a highest overall power consumption amount. Then, the highest overall power consumption amount is compared with the supply power amount. If the highest overall power consumption amount is higher than the supply power amount, a power consumption adjustment application program is executed. If a specified peripheral device of the plural peripheral devices is ready to perform a task, an information about the current power consumption amounts of the other running peripheral devices is provided to the embedded controller. After the embedded controller decreases the current power consumption amount of at least one of the running peripheral devices according to the predetermined power consumption amounts and the current power consumption amounts, the specified peripheral device to perform the task. The sum of the current power consumption amounts of the running peripheral devices and the basic power consumption amount is not higher than the supply power amount.

In an embodiment, the system power consumption control method is executed by a firmware component that is installed in the embedded controller, or the system power consumption control method is executed by an execution program that is stored in a flash memory electrically connected with the embedded controller, wherein the power consumption adjustment application program is a part of the execution program.

In an embodiment, the supply power information of the power supply device is stored in an electrically-erasable programmable read only memory, and the electrically-erasable programmable read only memory is built in or externally connected to the power supply device.

In an embodiment, the power supply device generates the supply power information when a mechanical switch is poked by a user, wherein the mechanical switch is installed on a casing of the power supply device.

In an embodiment, the integrated computer system further includes a host, and one of the plural peripheral devices is a central processing unit. The embedded controller, the power supply device and the central processing unit are included in the host, and an operation system program that is loaded to the central processing unit is controlled by the central processing unit.

In an embodiment, the peripheral power consumption information of the central processing unit is realized according to a model number of the central processing unit. The embedded controller realizes the at least two predetermined power consumption amounts of the central processing unit by inquiring the model number through a look-up table.

In an embodiment, the peripheral power consumption information is provided to the embedded controller through a corresponding pin when the corresponding peripheral device is electrically connected to the embedded controller.

In an embodiment, the system power consumption control method further includes the following steps. The power consumption adjustment application program controls the running peripheral devices. If the task has been completed by the specified peripheral device, the current power consumption amount of the at least one of the running peripheral devices is not decreased under control of the embedded controller.

In an embodiment, the system power consumption control method further includes the following steps. The embedded controller decides the at least one of the running peripheral devices to decrease the current power consumption amount according to a difference between the at least two predetermined power consumption amounts and a difference between the current power consumption amount and the corresponding predetermined power consumption amount. Moreover, the embedded controller determines an extent of decreasing the current power consumption amount of the at least one of the running peripheral devices according to a required power consumption amount of the specified peripheral device ready to perform the task.

In an embodiment, the system power consumption control method further includes the following steps. The embedded controller adds up the current power consumption amount of the running peripheral devices, a required power consumption amount of the specified peripheral device ready to perform the task and the basic power consumption amount so as to obtain an estimated overall power consumption amount, and compares the estimated overall power consumption amount with the supply power amount. If the estimated overall power consumption amount is higher than the supply power amount, the specified peripheral device performs the task after the embedded controller decreases the current power consumption amount of the at least one of the running peripheral devices according to the predetermined power consumption amounts and the current power consumption amounts. Whereas, if the estimated overall power consumption amount is not higher than the supply power amount, the specified peripheral device performs the task while maintaining the current power consumption amounts of the running peripheral devices.

In accordance with another aspect of the present invention, there is provided an integrated computer system with adjustable power consumption. The integrated computer system includes a power supply device, an embedded controller and plural peripheral devices. The power supply device provides electric power at a supply power amount. The embedded controller receives a supply power information corresponding to a supply power amount provided from the power supply device. The plural peripheral devices are electrically connected with the embedded controller. A peripheral power consumption information corresponding to at least two predetermined power consumption amounts is provided from each peripheral device to the embedded controller. The embedded controller adds up the highest predetermined power consumption amounts in each peripheral power consumption information and a basic power consumption amount of the integrated computer system so as to obtain a highest overall power consumption amount, and compares the highest overall power consumption amount with the supply power amount. If the highest overall power consumption amount is higher than the supply power amount, a power consumption adjustment application program is executed. If a specified peripheral device of the plural peripheral devices is ready to perform a task, an information about the current power consumption amounts of the other running peripheral devices is provided to the embedded controller, and the specified peripheral device performs the task after the embedded controller decreases the current power consumption amount of at least one of the running peripheral devices according to the predetermined power consumption amounts and the current power consumption amounts. The sum of the current power consumption amounts of the running peripheral devices and the basic power consumption amount is not higher than the supply power amount.

In an embodiment, the supply power information of the power supply device is stored in an electrically-erasable programmable read only memory, and the electrically-erasable programmable read only memory is built in or externally connected to the power supply device.

In an embodiment, the power supply device generates the supply power information when a mechanical switch is poked by a user, wherein the mechanical switch is installed on a casing of the power supply device.

In an embodiment, the integrated computer system further includes a host, and one of the plural peripheral devices is a central processing unit. The embedded controller, the power supply device and the central processing unit are included in the host, and an operation system program that is loaded to the central processing unit is controlled by the central processing unit.

In an embodiment, the peripheral power consumption information of the central processing unit is realized according to a model number of the central processing unit. The embedded controller realizes the at least two predetermined power consumption amounts of the central processing unit by inquiring the model number through a look-up table.

In an embodiment, the peripheral power consumption information is provided to the embedded controller through a corresponding pin when the corresponding peripheral device is electrically connected to the embedded controller.

When compared with the conventional technologies, the integrated computer system and the system power consumption control method of the present invention have the following advantages. Firstly, the power supply device with a lower power level is cost-effective and applicable to the system requiring the higher power consumption amount. Secondly, the manufacture can effectively judge the usage or distribution of the supply power amount of the power supply device in the system during the production line stage or the installation stage. The associated information is provided to the user. Consequently, the desired power supply device is selected according to the user's requirements. Thirdly, while the power consumption adjustment application program is executed, the performance of the running peripheral device is not obviously deteriorated. That is, the system can still provide good service and quality in various applications.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic functional diagram illustrating the architecture of an integrated computer system according to an embodiment of the present invention; and
FIGS. 2A and 2B illustrate a flowchart of a system power consumption control method for the integrated computer system according to the embodiment of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. In the following embodiments and drawings, the elements irrelevant to the concepts of the present invention are omitted and not shown.

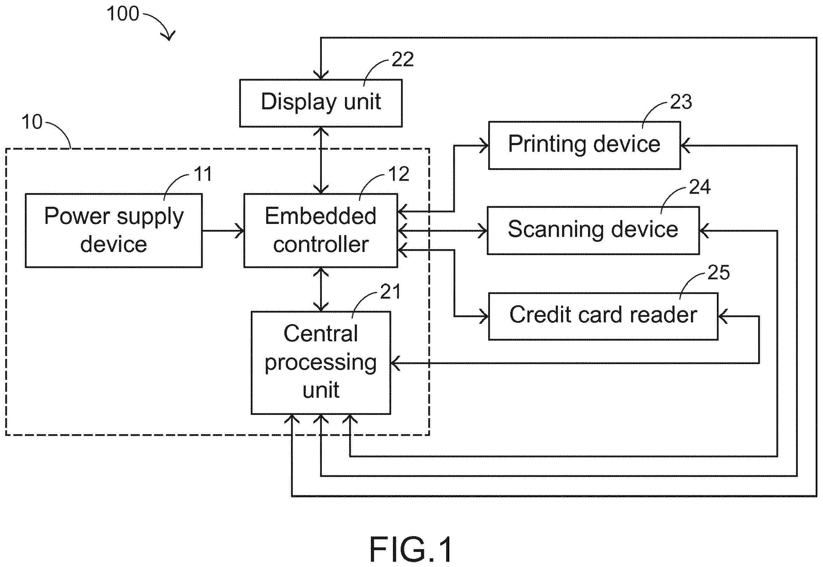

The present invention provides an integrated computer system and a system power consumption control method for the integrated computer system. FIG. 1 is a schematic functional diagram illustrating the architecture of an integrated computer system according to an embodiment of the present invention. As shown in FIG. 1, the integrated computer system 100 comprises a power supply device 11, an embedded controller 12 and plural peripheral devices. These peripheral devices include a central processing unit 21, a display unit 22, a printing device 23, a scanning device 24 and a credit card reader 25. The electric connection relationships between these components are shown in FIG. 1. For succinctness, the electric connection relationships between the power supply device 11 and the other components are not clearly shown in FIG. 1.

In this embodiment, the integrated computer system 100 is a point-of-sale (POS) system. That is, the main mechanism of the integrated computer system 100 comprises a host 10 and the display unit 22, and a point-of-sale is executed in the integrated computer system 100. Moreover, the embedded controller 12, the power supply device 11 and the central processing unit 21 are included in the host 10, and the display unit 22, the printing device 23, the scanning device 24 and the credit card reader 25 are external devices that are electrically connected with the host 10.

The integrated computer system 100 further comprises other basic components. For example, the integrated computer system 100 further comprises a mainboard and a memory (not shown). These basic components are also included in the host 10. Moreover, these basic components are electrically connected with the peripheral devices. For example, the embedded controller 12, the central processing unit 21 and the memory are directly installed on the main board. The power supply device 11, the display unit 22, the printing device 23, the scanning device 24 and the credit card reader 25 are electrically connected with the main board through a transmission line assembly (not shown).

In an embodiment, the display unit 22 is a touch screen. That is, the display unit 22 is display screen that allows a user to interact with the host by touching pictures or words on the display screen. Moreover, the display unit is also a liquid crystal display (LCD) device with adjustable luminance. In an embodiment, the printing device 23 is a thermal-type or thermal transfer-type printer that uses special print paper and ribbons. In some other embodiments, the printing device 23 is a printer that uses ordinary paper as the print medium. For example, the scanning device 24 is a barcode scanner. Preferably but not exclusively, the credit card reader 25 is a magnetic stripe reader or an inductive card reader. In some other embodiments, the credit card reader 25 includes both of the magnetic stripe reader and the inductive card reader. These peripheral devices can provide checkout services, consulting services or other applications.

In an embodiment, the integrated computer system 100 is not equipped with a built-in battery. That is, an external power source (e.g., the utility AC power source) into a DC voltage by the power supply device 11 of the integrated computer system 100. The components of the integrated computer system 100 are powered by the DC voltage. As mentioned above, the power level of the power supply device 11 is determined according to the practical requirements. For example, the power level of the power supply device 11 is 45 Watt, 90 Watt, 120 Watt or 180 Watt. The power supply device 11 is disposed within the host 10. Particularly, during the production or installation process of the integrated computer system 100, the power consumption conditions of the peripheral devices or associated components are evaluated. After evaluation, the power level of the power supply device to be selected is determined.

The technology of the present invention has the following feature. If the total power consumption amount of all peripheral devices and associated components of the integrated computer system 100 is not higher than the available power amount of the power supply device 11, the power supply device 11 can be effectively in the normal working state. Whereas, if the total power consumption amount of all peripheral devices and associated components of the integrated computer system 100 is higher than the available power amount of the power supply device 11, the power consumption amount of the integrated computer system 100 is properly decreased and controlled and thus the power supply device 11 is still in the normal working state. Under this circumstance, the electric power is still sufficient, and the power interruption problem is avoided.

In an embodiment, the system power consumption control method is executed by a firmware component that is installed in the embedded controller 12. Alternatively, the system power consumption control method is executed by an execution program, and the execution program is stored in a flash memory (not shown) that is electrically connected with the embedded controller 12. In other words, the embedded controller 12 is a processing core for performing an associated power consumption control operation. For example, the embedded controller 12 is a microprocessor with a specified application program. In this embodiment, the embedded controller 12 can monitor and control the power consumption amount of each hardware component of the integrated computer system 100.

The central processing unit 21 can control an operation system program that is loaded to the host 10 (e.g., loaded into the memory of the host 10). For example, the operation system is a point-of-sale program. In accordance with the present invention, the embedded controller 12 is power control core, and the central processing unit 21 is an object whose power consumption amount is intended to be adjusted. That is, the rank of the embedded controller 12 is higher than the central processing unit 21.

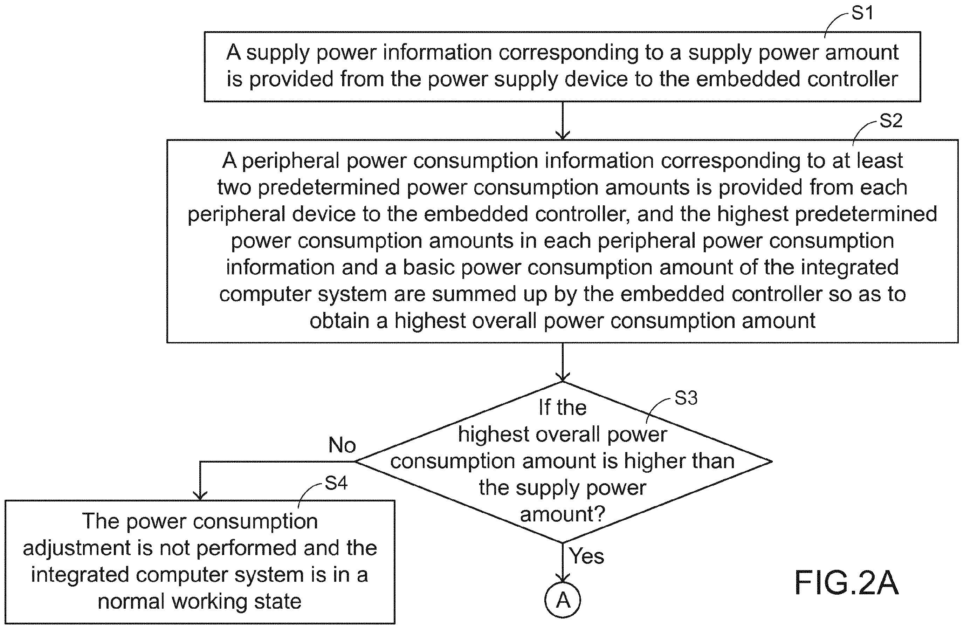

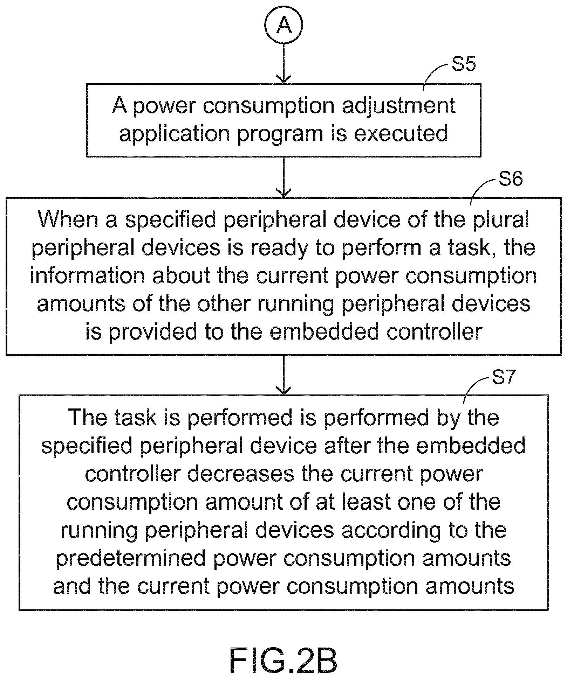

FIGS. 2A and 2B illustrate a flowchart of a system power consumption control method for the integrated computer system according to the embodiment of the present invention.

Firstly, a supply power information corresponding to a supply power amount is provided from the power supply device 11 to the embedded controller 12 (Step S1.). Then, a peripheral power consumption information corresponding to at least two predetermined power consumption amounts is provided from each peripheral device to the embedded controller 12, and the highest predetermined power consumption amounts in each peripheral power consumption information and a basic power consumption amount of the integrated computer system are added up by the embedded controller 12 so as to obtain a highest overall power consumption amount (Step S2). Then, a step S3 is performed to judge whether the highest overall power consumption amount is higher than the supply power amount according to the result of comparing the highest overall power consumption amount with the supply power amount. If the highest overall power consumption amount is not higher than the supply power amount, the power consumption adjustment is not performed and the integrated computer system is in a normal working state (Step S4). If the highest overall power consumption amount is higher than the supply power amount, a power consumption adjustment application program is executed (Step S5). When a specified peripheral device of the plural peripheral devices is ready to perform a task, the information about the current power consumption amounts of the other running peripheral devices is provided to the embedded controller (Step S6). After the embedded controller 12 decreases the current power consumption amount of one of the running peripheral devices, the task is performed is performed by the specified peripheral device according to the predetermined power consumption amounts and the current power consumption amounts (Step S7).

In the step S1, the power supply device 11 with the required power level is installed in the host 10. That is, the power supply device 11 provides electric energy at the required power level. In accordance with another feature of the present invention, the supply power amount is realized by the embedded controller 12 before the integrated computer system 100 is enabled or when the integrated computer system 100 is started. That is, the supply power amount is realized by the embedded controller 12 according to the supply power information.

In an embodiment, the supply power information of the power supply device 11 is stored in an electrically-erasable programmable read only memory (abbreviated as EEPROM, not shown). The electrically-erasable programmable read only memory is built in or externally connected to the power supply device 11. When the integrated computer system 100 is powered on or the power supply device 11 is turned on, the supply power information is transmitted from the power supply device 11 to the embedded controller 12. Consequently, the embedded controller 12 realizes the power level of the power supply device 11.

The way of allowing the embedded controller 12 to realize the power level of the power supply device 11 is not restricted. For example, in another embodiment, a mechanical switch is installed on a casing of the power supply device 11 so as to be poked by the user. For example, the mechanical switch comprises a set of specially-defined switches. When the mechanical is poked according to the actual power level in the production stage or the installation stage, the supply power information is transmitted from the power supply device 11 to the embedded controller 12.

In the step S2, the embedded controller 12 collects the power consumption ranges of the plural peripheral devices in the working states. In an embodiment, the at least two predetermined power consumption amounts include the lowest predetermined power consumption amount and the highest predetermined power consumption amount of each peripheral device in the working state. Moreover, the embedded controller 12 realizes the at least two predetermined power consumption amounts according to the peripheral power consumption information from each peripheral device. In case that a peripheral device provides a third predetermined power consumption amount to the embedded controller 12, the predetermined power consumption amount lies between the lowest predetermined power consumption amount and the highest predetermined power consumption amount.

That is, after the embedded controller 12 realizes the lowest predetermined power consumption amount and the highest predetermined power consumption amount of a peripheral device, the embedded controller 12 realizes the possible power consumption range of the peripheral device in the working state. For example, the power consumption amounts of the central processing unit 21 corresponding to different processing speeds are determined according to the working frequencies. The luminance values of the display unit 22 are distinguished when the operation system (i.e., the point-of-sale program) is in the usage state or the standby state. Moreover, the power consumptions of the scanning device 24 or the credit card reader 25 are different when the scanning device 24 or the credit card reader 25 performs the scanning operation or the reading operation or is in the standby state.

In an embodiment, the integrated computer system 100 is operated under the hardware architecture of the point-of-sale system. Consequently, the peripheral power consumption information is provided to the embedded controller 12 through the corresponding pin when the corresponding peripheral device is electrically connected to the embedded controller 12. Particularly, the designated information has been recorded in each peripheral device (e.g., written into a specified memory) during the assembling procedure. After the peripheral device is electrically connected with the embedded controller 12 through the confirmed pin, the peripheral power consumption information is provided to the embedded controller 12.

As mentioned above, the central processing unit 21 is also a peripheral device. In this embodiment, the peripheral power consumption information of the central processing unit 21 is realized according to a model number of the central processing unit 21. After the model number of the central processing unit 21 is recognized, the peripheral power consumption information or another associated information of the central processing unit 21 can be realized. Consequently, after the central processing unit 21 is electrically connected with the embedded controller 12, the embedded controller 12 realizes the at least two predetermined power consumption amounts of the central processing unit 21 by comparing and inquiring the model number through a look-up table, which is written into a specified memory.

The basic power consumption amount of the integrated computer system 100 contains the power consumption amounts required to run the embedded controller 12, the main board, the memory and the other basic electronic components. Optionally, the basic power consumption amount further contains the possible power loss of the conduction lines during transmission. In this embodiment, the basic power consumption amount is considered as a fixed value. That is, the high level and the lower level of the basic power consumption amount are not taken into consideration. In comparison with the peripheral devices, the fraction of the basic power consumption amount in the highest overall power consumption amount is very low.

After the highest predetermined power consumption amounts and the basic power consumption amount are added up by the embedded controller 12 in the step S2, the highest overall power consumption amount denotes the power consumption amount in the extreme operating condition of the overall system. In the extreme operating condition, all peripheral devices are running at the highest predetermined power consumption amounts. In the step S3, the embedded controller 12 judges whether the power level of the power supply device 11 is sufficient to run the overall system in the extreme operating condition according to the result of comparing the highest overall power consumption amount with the supply power amount.

Please refer to the step S3 and the step S4. If the highest overall power consumption amount is not higher than the supply power amount, it means that the power level of the power supply device 11 is sufficient to run the overall system in the extreme operating condition. That is, the power supply device 11 can be effectively operated in the normal working state. Meanwhile, the power consumption adjustment is not performed, and the integrated computer system 100 is in the normal working state.

Please refer to the step S3 and the step S5. If the highest overall power consumption amount is higher than the supply power amount, it means that the power level of the power supply device 11 is not sufficient to run the overall system in the extreme operating condition and the power interruption problem possibly occurs. Meanwhile, the power consumption adjustment application program is executed. Consequently, the integrated computer system 100 is possibly in the normal working state when the integrated computer system 100 is in in the extreme operating condition.

As mentioned above, the system power consumption control method of the present invention mainly comprises two processes. The first process is used for judging the usage or distribution of the supply power amount from the power supply device 11 to the peripheral devices (i.e., in the steps S1, S2 and S3). The second process is used for implementing the power consumption adjustment application program after the judging process (i.e., the steps S5, S6 and S7). The second process will be described later. As mentioned above, the system power consumption control method is executed by a firmware component that is installed in the embedded controller 12, or the system power consumption control method is executed by an execution program that is stored in a flash memory and executed by the embedded controller 12. The above two processes are executed by the execution program. Since the power consumption adjustment application program is responsible for adjusting the power consumption, the power consumption adjustment application program is one part of the execution program.

In an embodiment, the judging process (i.e., in the steps S1, S2 and S3) can be applied to the production line or the installation stage (i.e., before the integrated computer system 100 is enabled). The judging result can be provided to the user for allowing the user to evaluate the installation cost. Consequently, the user can decide whether the power supply device with a higher power level is adopted or whether the power supply device with a lower power level and the power consumption adjustment application program is adopted.

Moreover, the judging process (i.e., in the steps S1, S2 and S3) can be used in the practical usage stage of the integrated computer system 100 (i.e., after the integrated computer system 100 is enabled) to indicate whether the power level of the power supply device 11 is sufficient. In addition, the corresponding adjustment is dynamically performed in the subsequent process. In case that the user purchases the integrated computer system 100 (i.e., the point-of-sale system) and self-changes the peripheral devices or self-changes the power supply device 11, the hardware condition of the integrated computer system 100 is different from the original architecture. In the practical usage stage of the integrated computer system 100, the judging process (i.e., in the steps S1, S2 and S3) is needed.

While the power consumption adjustment application program is executed (i.e., in the steps S5 and S6), the integrated computer system 100 is still in the working state. However, if the usage condition of the power supply device is changed, for example a specified peripheral device is ready to perform a task, the power consumption adjustment application program notifies the embedded controller 12 to understand and control. In this context, the specified peripheral device ready to perform the task is powered and in the standby state. Consequently, more supply level of the power supply device 11 will be consumed.

Furthermore, the step of providing the information about the current power consumption amounts of the running peripheral devices to the embedded controller 12 is performed. For example, the embedded controller 12 actively inquires and collects the information about the current power consumption amounts of the running peripheral devices, or the running peripheral devices periodically and actively provides the information about the current power consumption amounts to the embedded controller 12. For example, the current power consumption amount of the running peripheral device is equal to the lowest predetermined power consumption amount, or the highest predetermined power consumption amount, or any other power consumption amount between the lowest predetermined power consumption amount and the highest predetermined power consumption amount. In view of effective adjustment, the embedded controller 12 has to realize the usage condition of the supply power amount.

In the steps S5 and S6, the supply power amount is not sufficient to run the overall system in the extreme operating condition. If the power consumption amount of the specified peripheral device to perform the task is large (e.g., the printing device 23 is ready to perform a printing task) or equal to the highest predetermined power consumption amount, the supply power amount is possibly insufficient or possibly sufficient. Consequently, the embedded controller 12 has to perform a second judging process. In accordance with another feature of the present invention, the work command is blocked from being transmitted to specified peripheral device that is ready to perform the task while the second judging process is performed.

Consequently, the step S7 further comprises the following steps. Firstly, the embedded controller 12 adds up the current power consumption amount of the running peripheral devices, the required power consumption amount of the specified peripheral device ready to perform the task and the basic power consumption amount so as to obtain an estimated overall power consumption amount, and compares the estimated overall power consumption amount with the supply power amount. If the estimated overall power consumption amount is higher than the supply power amount, the specified peripheral device performs the task after the embedded controller 12 decreases the current power consumption amount of at least one of the running peripheral devices according to the predetermined power consumption amounts and the current power consumption amounts. Whereas, if the estimated overall power consumption amount is not higher than the supply power amount, the specified peripheral device performs the task while maintaining the current power consumption amounts of the running peripheral devices.

A method of decreasing the power consumption amount comprises the following steps. Firstly, the embedded controller 12 decides the at least one of the running peripheral devices to decrease the current power consumption amount according to a difference between the at least two predetermined power consumption amounts and a difference between the current power consumption amount and the corresponding predetermined power consumption amount. Then, the embedded controller 12 determines an extent of decreasing the current power consumption amount of the at least one of the running peripheral devices according to a required power consumption amount of the specified peripheral device ready to perform the task. Generally, the decreased extents of different peripheral devices or components in the power consumption ranges may be different, or the current power consumption amounts of some peripheral devices may be too low to be further decreased. For example, the current power consumption amount is close to the lowest predetermined power consumption amount. For allowing the specified peripheral device to perform the task, the embedded controller 12 has to decrease the current power consumption amount of a selected object and determine the suitable decreased extent.

In accordance with the power consumption adjusting principle of the present invention, the sum of the current power consumption amounts of the running peripheral devices and the basic power consumption amount is not higher than the supply power amount after the adjustment. In case that the difference between the current power consumption amount and the lowest predetermined power consumption amount of an object is larger, the object has a higher priority to be selected to be subjected to the power consumption adjustment. If the required power consumption amount of the specified peripheral device ready to perform the task is effectively provided after the current power consumption amount of only one running peripheral device is decreased, it is not necessary to simultaneously decrease the current power consumption amounts of two running peripheral devices.

It is noted that numerous modifications and alterations may be made while retaining the teachings of the invention. For example, in another embodiment, the current power consumption amounts of two or three running peripheral devices are simultaneously decreased. In an embodiment, only a portion of the current power consumption amount of the running peripheral device is decreased. Alternatively, the peripheral device that is temporarily not in the usage state is disabled. That is, the power consumption amount is decreased to zero.

After the current power consumption amount of the selected object is properly decreased, the embedded controller 12 notifies the power consumption adjustment application program to have the specified peripheral device perform the task or execute the command.

In an embodiment, the system power consumption control method further comprises the following steps. The power consumption adjustment application program controls the running peripheral devices. If the task has been completed by the specified peripheral device, the current power consumption amount of at least one of the running peripheral devices is not decreased under control of the embedded controller 12. In other words, the system power consumption control method of the present invention provides a time-interleaved processing mechanism for preventing plural peripheral devices from running at the high power consumption amounts. Although the supply power amount provided by the power supply device 11 is limited, the current power consumption amount of the selected running peripheral device is decreased. Consequently, the saved power amount is transferred to another peripheral device.

In some situations, the task is not continuously performed by the specified peripheral device. For example, after the printing device 23 completes the task of printing a receipt or an invoice, the task is not continuously done. Meanwhile, the unused power amount is transferred to the running peripheral device whose power consumption amount has been decreased. During the operation of the integrated computer system, the luminance of the display unit 22 (e.g., the LCD screen) is possibly decreased or the data processing speed of the operation system is possibly slowed down. However, the integrated computer system is still in the working state. In other words, the integrated computer system can achieve the application requirement of the user under the proper power consumption control.

When compared with the conventional technologies, the integrated computer system and the system power consumption control method of the present invention have the following advantages. Firstly, the power supply device with a lower power level is cost-effective and applicable to the system requiring the higher power consumption amount. Secondly, the manufacture can effectively judge the usage or distribution of the supply power amount of the power supply device in the system during the production line stage or the installation stage. The associated information is provided to the user. Consequently, the desired power supply device is selected according to the user's requirements. Thirdly, while the power consumption adjustment application program is executed, the performance of the running peripheral device is not obviously deteriorated. That is, the system can still provide good service and quality in various applications.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A system power consumption control method for an integrated computer system (100), the integrated computer system (100) comprising an embedded controller (12), a power supply device (11) and plural peripheral devices, the power supply device (11) providing electric power at a supply power amount, **characterized in that** the system power consumption control method comprises steps of:
allowing a supply power information corresponding to the supply power amount to be provided from the power supply device (11) to the embedded controller (12);
allowing a peripheral power consumption information corresponding to at least two predetermined power consumption amounts to be provided from each peripheral device to the embedded controller (12);
the embedded controller (12) adding up the highest predetermined power consumption amounts in each peripheral power consumption information and a basic power consumption amount of the integrated computer system (100) so as to obtain a highest overall power consumption amount, and comparing the highest overall power consumption amount with the supply power amount;
if the highest overall power consumption amount is higher than the supply power amount, executing a power consumption adjustment application program;
if a specified peripheral device of the plural peripheral devices is ready to perform a task, providing an information about current power consumption amounts of the other running peripheral devices to the embedded controller (12); and
allowing the specified peripheral device to perform the task after the embedded controller (12) decreases the current power consumption amount of at least one of the running peripheral devices according to the predetermined power consumption amounts and the current power consumption amounts,
wherein a sum of the current power consumption amounts of the running peripheral devices and the basic power consumption amount is not higher than the supply power amount.

2. The system power consumption control method according to claim 1, **characterized in that** the system power consumption control method is executed by a firmware component that is installed in the embedded controller (12), or the system power consumption control method is executed by an execution program that is stored in a flash memory electrically connected with the embedded controller (12), wherein the power consumption adjustment application program is a part of the execution program.

3. The system power consumption control method according to claim 1, **characterized in that** the supply power information of the power supply device (11) is stored in an electrically-erasable programmable read only memory, and the electrically-erasable programmable read only memory is built in or externally connected to the power supply device (11).

4. The system power consumption control method according to claim 1, **characterized in that** the power supply device (11) generates the supply power information when a mechanical switch is poked by a user, wherein the mechanical switch is installed on a casing of the power supply device (11).

5. The system power consumption control method according to claim 1, **characterized in that** the integrated computer system (100) further comprises a host, and one of the plural peripheral devices is a central processing unit (21), wherein the embedded controller (12), the power supply device (11) and the central processing unit (21) are included in the host, and an operation system program that is loaded to the central processing unit (21) is controlled by the central processing unit (21).

6. The system power consumption control method according to claim 5, **characterized in that** the peripheral power consumption information of the central processing unit (21) is realized according to a model number of the central processing unit (21), wherein the embedded controller (12) realizes the at least two predetermined power consumption amounts of the central processing unit (21) by inquiring the model number through a look-up table.

7. The system power consumption control method according to claim 1, **characterized in that** the peripheral power consumption information is provided to the embedded controller (12) through a corresponding pin when the corresponding peripheral device is electrically connected to the embedded controller (12).

8. The system power consumption control method according to claim 1, **characterized in that** the system power consumption control method further comprises steps of:
allowing the power consumption adjustment application program to control the running peripheral devices; and
if the task has been completed by the specified peripheral device, the current power consumption amount of the at least one of the running peripheral devices is not decreased under control of the embedded controller (12).

9. The system power consumption control method according to claim 1, **characterized in that** the system power consumption control method further comprises steps of:
the embedded controller (12) deciding the at least one of the running peripheral devices to decrease the current power consumption amount according to a difference between the at least two predetermined power consumption amounts and a difference between the current power consumption amount and the corresponding predetermined power consumption amount; and
the embedded controller (12) determining an extent of decreasing the current power consumption amount of the at least one of the running peripheral devices according to a required power consumption amount of the specified peripheral device ready to perform the task.

10. The system power consumption control method according to claim 1, **characterized in that** the system power consumption control method further comprises steps of:
the embedded controller (12) adding up the current power consumption amount of the running peripheral devices, a required power consumption amount of the specified peripheral device ready to perform the task and the basic power consumption amount so as to obtain an estimated overall power consumption amount, and comparing the estimated overall power consumption amount with the supply power amount;
if the estimated overall power consumption amount is higher than the supply power amount, allowing the specified peripheral device to perform the task after the embedded controller (12) decreases the current power consumption amount of the at least one of the running peripheral devices according to the predetermined power consumption amounts and the current power consumption amounts; and
if the estimated overall power consumption amount is not higher than the supply power amount, allowing the specified peripheral device to perform the task while maintaining the current power consumption amounts of the running peripheral devices.

11. An integrated computer system (100) with adjustable power consumption, **characterized in that** the integrated computer system (100) comprises:
a power supply device (11) providing electric power at a supply power amount;
an embedded controller (12) receiving a supply power information corresponding to a supply power amount provided from the power supply device (11); and
plural peripheral devices electrically connected with the embedded controller (12), wherein a peripheral power consumption information corresponding to at least two predetermined power consumption amounts is provided from each peripheral device to the embedded controller (12),
wherein the embedded controller (12) adds up the highest predetermined power consumption amounts in each peripheral power consumption information and a basic power consumption amount of the integrated computer system (100) so as to obtain a highest overall power consumption amount, and compares the highest overall power consumption amount with the supply power amount, wherein if the highest overall power consumption amount is higher than the supply power amount, a power consumption adjustment application program is executed, wherein if a specified peripheral device of the plural peripheral devices is ready to perform a task, an information about current power consumption amounts of the other running peripheral devices is provided to the embedded controller (12), and the specified peripheral device performs the task after the embedded controller (12) decreases the current power consumption amount of at least one of the running peripheral devices according to the predetermined power consumption amounts and the current power consumption amounts, wherein a sum of the current power consumption amounts of the running peripheral devices and the basic power consumption amount is not higher than the supply power amount.

12. The integrated computer system (100) method according to claim 11, **characterized in that** the supply power information of the power supply device (11) is stored in an electrically-erasable programmable read only memory, and the electrically-erasable programmable read only memory is built in or externally connected to the power supply device (11); or **characterized in that** the power supply device (11) generates the supply power information when a mechanical switch is poked by a user, wherein the mechanical switch is installed on a casing of the power supply device (11).

13. The integrated computer system (100) method according to claim 11, **characterized in that** the integrated computer system (100) further comprises a host, and one of the plural peripheral devices is a central processing unit (21), wherein the embedded controller (12), the power supply device (11) and the central processing unit (21) are included in the host, and an operation system program that is loaded to the central processing unit (21) is controlled by the central processing unit (21).

14. The integrated computer system (100) method according to claim 13, **characterized in that** the peripheral power consumption information of the central processing unit (21) is realized according to a model number of the central processing unit (21), wherein the embedded controller (12) realizes the at least two predetermined power consumption amounts of the central processing unit (21) by inquiring the model number through a look-up table.

15. The integrated computer system (100) method according to claim 11, **characterized in that** the peripheral power consumption information is provided to the embedded controller (12) through a corresponding pin when the corresponding peripheral device is electrically connected to the embedded controller (12).
